(19) Europäisches Patentamt
European Patent Office
Office européen des brevets

(11) EP 4 287 339 B1

(12) EUROPEAN PATENT SPECIFICATION

(45) Date of publication and mention of the grant of the patent:
**25.02.2026 Bulletin 2026/09**

(21) Application number: **22881277.2**

(22) Date of filing: **06.10.2022**

(51) International Patent Classification (IPC):
***H01M 10/0567** (2010.01)* ***H01M 10/052** (2010.01)*
***H01M 10/0569** (2010.01)*

(52) Cooperative Patent Classification (CPC):
**H01M 10/052; H01M 10/0567; H01M 10/0569;**
H01M 2300/0028; Y02E 60/10

(86) International application number:
**PCT/KR2022/015051**

(87) International publication number:
**WO 2023/063648 (20.04.2023 Gazette 2023/16)**

(54) **NON-AQUEOUS ELECTROLYTE SOLUTION FOR LITHIUM SECONDARY BATTERY AND LITHIUM SECONDARY BATTERY INCLUDING THE SAME**

WASSERFREIE ELEKTROLYTLÖSUNG FÜR LITHIUMSEKUNDÄRBATTERIE UND LITHIUMSEKUNDÄRBATTERIE DIESE ENTHALTEND

SOLUTION D'ÉLECTROLYTE NON AQUEUX POUR BATTERIE SECONDAIRE AU LITHIUM ET BATTERIE SECONDAIRE AU LITHIUM LE COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.10.2021 KR 20210135188**
**05.10.2022 KR 20220127418**

(43) Date of publication of application:
**06.12.2023 Bulletin 2023/49**

(73) Proprietor: **LG Energy Solution, Ltd.**
**Seoul 07335 (KR)**

(72) Inventors:
- **HAN, Jun Hyeok**
**Daejeon 34122 (KR)**
- **AHN, Kyoung Ho**
**Daejeon 34122 (KR)**
- **SHIN, Won Kyung**
**Daejeon 34122 (KR)**
- **LEE, Chul Haeng**
**Daejeon 34122 (KR)**
- **LEE, Won Tae**
**Daejeon 34122 (KR)**
- **JI, Su Hyeon**
**Daejeon 34122 (KR)**
- **OH, Young Ho**
**Daejeon 34122 (KR)**
- **JEONG, You Kyeong**
**Daejeon 34122 (KR)**

(74) Representative: **Hoffmann Eitle**
**Patent- und Rechtsanwälte PartmbB**
**Arabellastraße 30**
**81925 München (DE)**

(56) References cited:
**KR-A- 20170 110 521**
**KR-A- 20210 029 533**
**KR-B1- 101 937 898**
**US-A1- 2017 214 088**
**US-A1- 2018 076 488**
**US-B2- 10 923 768**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

## [TECHNICAL FIELD]

### Cross-reference to Related Applications

This application claims priority from Korean Patent Application Nos. 10-2021-0135188, filed on October 12, 2021, and 10-2022-0127418, filed on October 5, 2022.

### Technical Field

The present invention relates to anon-aqueous electrolyte solution for a lithium secondary battery, comprising an additive which may form a robust SEI film, and a lithium secondary battery capable of suppressing an increase in initial resistance and improving output characteristics by including the same.

## [BACKGROUND ART]

There is a need to develop technology for efficiently storing and utilizing electrical energy as personal IT devices and computer networks are developed with the recent development of information society and the accompanying dependency of society as a whole on the electrical energy is increased.

A secondary battery is a technology that is most suitable for various applications among developed technologies, and among the secondary batteries, a lithium ion battery, which may be miniaturized to be applicable to a personal IT device and has the highest energy density, is in the spotlight.

A lithium ion battery is composed of a positive electrode comprised of a transition metal oxide containing lithium, a negative electrode comprised of a carbon-based material such as graphite capable of storing lithium, an electrolyte solution that is a medium for transferring lithium ions, and a separator. It is important to properly select these components in order to improve the electrochemical properties of the battery.

On the other hand, when a lithium secondary battery is operated under high temperature conditions, PF6- anions are thermally decomposed from lithium salts such as LiPF6 contained in an electrolyte solution to form Lewis acids such as PF5, which react with moisture to generate HF. Materials such as PF5 or HF may not only destruct a film formed on the surface of an electrode, but also cause decomposition of an organic solvent. As a result, a side reaction between the exposed surface of the electrode and the electrolyte solution causes the elution of transition metal ions from the positive electrode. As such, as the transition metal ions of the positive electrode are eluted, the lattice structure of the positive electrode becomes unstable, which leads to the generation of active oxygen in the positive electrode. This further facilitates decomposition of the electrolyte solvent to accelerate gas generation. Moreover, as the eluted transition metal ions move to the negative electrode through the electrolyte solution and are then electro-deposited on the surface of the negative electrode, it causes the consumption of additional lithium ions due to the destruction of a solid electrolyte interphase (SEI) film and a regeneration reaction, and causes an increase in resistance and capacity degradation.

Thus, various studies are being conducted to develop a secondary battery capable of implementing excellent performance by maintaining the passivation ability of a SEI film even under high temperature conditions.

US 10 923 768 B2 discloses an electrolyte additive according to the prior art.

## [DISCLOSURE OF THE INVENTION]

## [TECHNICAL PROBLEM]

In order to solve the above problems, the present invention aims to provide a non-aqueous electrolyte solution for a lithium secondary battery including an additive capable of providing a SEI enhancing effect, and a lithium secondary battery with improved output characteristics and a suppressed increase in battery resistance by including the same.

## [TECHNICAL SOLUTION]

According to an embodiment of the present invention, it provides a non-aqueous electrolyte solution for a lithium secondary battery which comprises a lithium salt, a non-aqueous organic solvent and a compound represented by the following Formula 1.

[Formula 1]

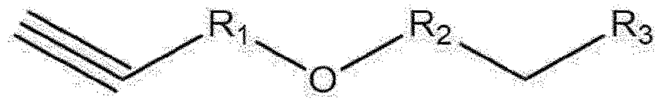

In Formula 1 above,

$R_1$ and $R_2$ are each independently an alkylene group having 1 to 10 carbon atoms, and $R_3$ is an alkyl group having 1 to 20 carbon atoms which are substituted with one or more fluorines.

According to another aspect of the present invention, there is provided a lithium secondary battery which includes a positive electrode including a positive electrode active material; a negative electrode including a negative electrode active material; a separator disposed between the negative electrode and the positive electrode; and the non-aqueous electrolyte solution for a lithium secondary battery according to the present invention.

**[ADVANTAGEOUS EFFECTS]**

Since the compound represented by Formula 1 included in the non-aqueous electrolyte for a lithium secondary battery of the present invention includes a propargyl group (-C≡C-) and a fluorocarbon functional group substituted with one or more fluorine elements in the structure, it may be reduced before the organic solvent to form a low-resistance SEI film including a fluorocarbon component on the surface of the electrode, thereby suppressing additional reductive decomposition of the non-aqueous electrolyte solution.

Therefore, when such a non-aqueous electrolyte solution for a lithium secondary battery is included, this prevents a self-discharge reaction of the negative electrode and suppresses an increase in initial resistance so that a lithium secondary battery having improved output characteristics at room temperature and low temperatures may be achieved.

**[BEST MODE FOR CARRYING OUT THE INVENTION]**

First, prior to the description of the present invention, it will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention. Meanwhile, the terms used herein are used only to describe exemplary embodiments, and are not intended to limit the present invention. Singular forms are intended to include plural forms as well, unless the context clearly indicates otherwise. It should be appreciated that the terms such as "including", "comprising", or "having" as used herein are intended to embody specific features, numbers, steps, elements, and/or combinations thereof, and does not exclude existence or addition of other specific features, numbers, steps, elements, and/or combinations thereof.

In the present specification, the expression "%" denotes wt % unless explicitly stated otherwise.

Before describing the present invention, the expressions "a" and "b" in the description of "a to b carbon atoms" in the specification each denote the number of carbon atoms included in a specific functional group. That is, the functional group may include "a" to "b" carbon atoms.

Also, unless otherwise defined in the specification, the expression "substitution" denotes that at least one hydrogen bonded to carbon is substituted with an element other than hydrogen, for example, an alkyl group having 1 to 5 carbon atoms or a fluorine element.

Hereinafter, the present invention will be described in more detail.

Generally, with respect to a lithium secondary battery, a film having passivation ability is formed on surfaces of a negative electrode and a positive electrode, while a non-aqueous electrolyte solution is decomposed during initial charge and discharge, to secure high-temperature storage characteristics. However, the film is deteriorated by Lewis acid materials such as HF and $PF_5$ generated by thermal decomposition of lithium salts ($LiPF_6$, etc.) widely used in lithium ion batteries. That is, when the elution of the transition metal element from the positive electrode occurs due to the attack of Lewis acid materials, the surface resistance of the electrode increases due to a change in the structure of the surface, and the theoretical capacity decreases as the metallic elements, which are the redox center, are lost, and thus expressing capacity may be reduced. Also, the transition metal ions thus eluted are not only electrodeposited on the negative electrode reacting in a strong reduction potential range to consume electrons, but also destruct a film during electrodeposition to expose the surface of the negative electrode, which causes an additional electrolyte decomposition reaction. As a result, negative electrode resistance and irreversible capacity increase, thereby resulting in a continuous degradation

of cell output characteristics.

Thus, in order to form a stable film, the present invention aims at providing a non-aqueous electrolyte solution for a lithium secondary battery capable of forming a low-resistance SEI film by including a compound comprising a propargyl group (-C≡C-) and a fluorocarbon functional group substituted with one or more fluorine elements in the molecular structure as an additive, and a lithium secondary battery including the same.

## Non-aqueous Electrolyte Solution for Lithium Secondary Battery

The present invention provides a non-aqueous electrolyte solution for a lithium secondary battery including a lithium salt, a non-aqueous organic solvent and a compound represented by Formula 1 below.

[Formula 1]

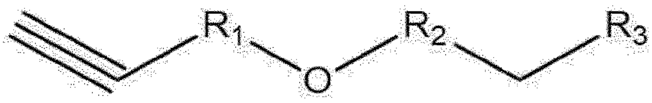

In Formula 1 above,
$R_1$ and $R_2$ are each independently an alkylene group having 1 to 10 carbon atoms, and $R_3$ is an alkyl group having 1 to 20 carbon atoms substituted with one or more fluorines.

### Lithium Salt

First, a lithium salt will be described as follows.

In the non-aqueous electrolyte solution for a lithium secondary battery according to an embodiment of the present invention, any lithium salt typically used in an electrolyte solution for a lithium secondary battery may be used as the lithium salt without limitation, and, for example, the lithium salt may include $Li^+$ as a cation, and may include at least one selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $B_{10}Cl_{10}^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $CH_3SO_3^-$, $CF_3(CF_2)_7SO_3^-$, $CF_3CO_2^-$, $CH_3CO_2^-$, $SCN^-$ and $(CF_3CF_2SO_2)_2N^-$. Specifically, the lithium salt may include at least one selected from the group consisting of LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, LiBOB ($LiB(C_2O_4)_2$), $LiCF_3SO_3$, LiTFSI ($LiN(SO_2CF_3)_2$), LiFSI ($LiN(SO_2F)_2$), $LiCH_3SO_3$, $LiCF_3CO_2$, $LiCH_3CO_2$and LiBETI ($LiN(SO_2CF_2CF_3)_2$) as an anion. Specifically, the lithium salt may include a single material selected from the group consisting of $LiBF_4$, $LiClO_4$, $LiPF_6$, LiBOB ($LiB(C_2O_4)_2$), $LiCF_3SO_3$, LiTFSI ($LiN(SO_2CF_3)_2$), LiFSI ($LiN(SO_2F)_2$) and LiBETI ($LiN(SO_2CF_2CF_3)_2$), or a mixture of two or more thereof. More specifically, the lithium salt may include$LiPF_6$.

The lithium salt may be appropriately changed in a normally usable range, but may be present in a concentration of 0.8 M to 3.0 M, specifically, 1.0 M to 3.0 M in the electrolyte solution to obtain an optimum effect of forming a film for preventing corrosion of a surface of an electrode.

In a case in which the concentration of the lithium salt satisfies the above range, viscosity of the non-aqueous electrolyte solution may be controlled so that optimum impregnability may be achieved, and an effect of improving capacity characteristics and cycle characteristics of the lithium secondary battery may be obtained by improving mobility of lithium ions.

### (2) Non-aqueous organic Solvent

Also, a non-aqueous organic solvent will be described as follows.

The non-aqueous organic solvent may include at least one selected from a cyclic carbonate compound, a linear carbonate compound, and a linear ester compound.

The cyclic carbonate compound is a highly viscous organic solvent which may well dissociate the lithium salt in a non-aqueous electrolyte solution due to high permittivity, wherein specific examples thereof may be at least one organic solvent selected from the group consisting of ethylene carbonate (EC),propylene carbonate (PC), 1,2-butylene carbonate, 2,3-butylene carbonate, 1,2-pentylene carbonate, 2,3-pentylene carbonate, and vinylene carbonate, and, among them, may include at least one of ethylene carbonate and propylene carbonate (PC).

Also, the linear carbonate compound is an organic solvent having low viscosity and low permittivity, wherein typical examples thereof may be at least one organic solvent selected from the group consisting of dimethyl carbonate (DMC ,diethyl carbonate (DEC),dipropyl carbonate, ethylmethyl carbonate (EMC), methylpropyl carbonate, and ethylpropyl carbonate, and specifically may include ethylmethyl carbonate (EMC).

Also, specific examples of the linear ester compound may be one selected from the group consisting of methyl acetate, ethyl acetate, propyl acetate, methyl propionate, ethyl propionate, propyl propionate and butyl propionate, and may typically include at least one of ethyl propionate and propyl propionate.

In the present invention, in order to prepare an electrolyte solution having high ionic conductivity, a mixed solvent of a cyclic carbonate compound, a linear carbonate compound, and a linear ester compound may be used as the non-aqueous organic solvent. Meanwhile, the cyclic carbonate compound may be included in an amount of 50 vol% or less specifically 40 vol% or less, preferably 30 vol% or less, based on the total content of the non-aqueous organic solvent of the present invention.

Also, the non-aqueous organic solvent may further include at least one of a cyclic ester compound, an ether-based compound, an amide-based compound and a nitrile-based compound. The cyclic ester compound may be at least one selected from the group consisting of γ-butyrolactone, γ-valerolactone, γ-caprolactone, σ-valerolactone, and ε-caprolactone.

Also, any one selected from the group consisting of dimethyl ether, diethyl ether, dipropyl ether, methylethyl ether, methylpropyl ether and ethylpropyl ether or a mixture of two or more of these may be used as the ester-based compound.

Also, the nitrile-based compound may be at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile,and 4-fluorophenylacetonitrile.

Meanwhile, the remainder excluding the lithium salt and additive in the non-aqueous electrolyte solution of the present invention may all be non-aqueous organic solvents unless otherwise stated.

### (3) Electrolyte solution additives

The non-aqueous electrolyte solution for a lithium secondary battery of the present invention may include a compound represented by the following Formula 1 as an electrolyte solution additive.

[0048] [Formula 1]

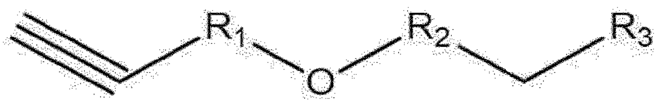

In Formula 1,

$R_1$ and $R_2$ are each independently an alkylene group having 1 to 10 carbon atoms; and $R_3$is an alkyl group having 1 to 20 carbon atoms which are substituted with one or more fluorines.

Specifically, the compound represented by Formula 1 includes a propargyl functional group in its structure and is easily reduced and decomposed on the surface of the negative electrode to form an SEI film having low resistance and high passivation ability. Accordingly, the durability of the negative electrode itself may be improved, but the transition metals may be prevented from being electrodeposited on the surface of the negative electrode, thereby preventing the self-discharge reaction of graphite-based and silicon-based negative electrodes due to the additional reduction and decomposition reaction of the electrolyte solution caused by the instability of the SEI film.

Also, the compound represented by Formula 1 forms a film which has secured oxidation resistance on the surface of the positive electrode by including a fluorocarbon functional group in which one or more fluorine elements are substituted at the end of the structure to suppress the elution of metallic impurities from the positive electrode and suppress the eluted metal ions from being electrodeposited and precipitated on the negative electrode, thereby preventing an internal short circuit.

As such, the non-aqueous electrolyte solution of the present invention includes a compound represented by Formula 1 including a fluorocarbon functional group substituted with one or more fluorine elements and propargyl group having excellent flame retardancy and non-flammability as an additive to form a robust SEI film having low resistance, thereby suppressing additional reductive decomposition of the non-aqueous electrolyte solution, but also preventing the self-discharge reaction of the negative electrode. Thus, a lithium secondary battery that suppresses an increase in initial resistance and has improved room temperature and low-temperature output characteristics may be manufactured.

Meanwhile, in the compound represented by Formula 1, $R_1$ and $R_2$may each independently be an alkylene group having 1 to 5 carbon atoms, and $R_3$ may be an alkyl group having 3 to 20 carbon atoms substituted with one or more fluorines.

Also, in the compound represented by Formula 1,$R_1$ and $R_2$ may each independently be an alkylene group

having 1 to 3 carbon atoms, and $R_3$ may be an alkyl group having 3 to 15 carbon atoms substituted with one or more fluorines.

Specifically, in the compound represented by Formula 1, $R_3$ may be an alkyl group having 3 to 10 carbon atoms substituted with one or more fluorines.

Preferably, the compound represented by Formula 1 may be at least one of the compounds represented by the following Formula 1a to Formula 1c.

[Formula 1a]

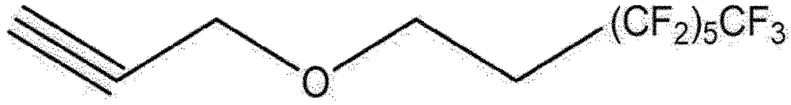

[Formula 1b]

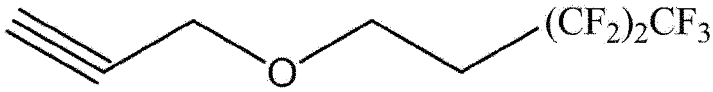

[Formula 1c]

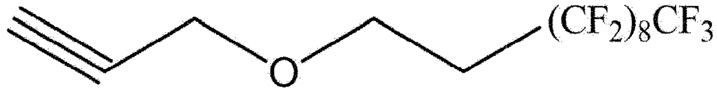

Meanwhile, the compound represented by Formula 1 may be included in an amount of 0.01 wt% to 10.0 wt% based on the total weight of the non-aqueous electrolyte solution for a lithium secondary battery.

In a case in which the compound represented by the Formula 1 is included in the above range, a low-resistance SEI film is formed on the surface of the negative electrode, while minimizing disadvantages such as side reactions, capacity degradation and resistance increase caused by additives, which may improve the effect of transferring the lithium. The self-discharge reaction of the negative electrode may be prevented by suppressing the additional reduction decomposition reaction of the electrolyte solution.

Specifically, in a case in which the content of the compound represented by Formula 1 is 0.01wt% or more, a stable film is formed during the operation of the battery. In a case in which the content the compound represented by Formula 1 is 10.0wt% or less, viscosity of the non-aqueous electrolyte solution may be controlled so that optimum impregnability may be achieved, an increase in battery resistance due to the decomposition of additives may be effectively suppressed, and the ionic conductivity in the battery may be also further increased to prevent the degradation of output characteristics.

Specifically, the compound represented by Formula 1 may be included in an amount of 0.1 wt% to 6.0 wt%, specifically 0.5 wt% to 5 wt%, preferably 0.5 wt% to 3 wt% in the non-aqueous electrolyte solution.

### (4) Other additives

Meanwhile, the non-aqueous electrolyte solution for a lithium secondary battery of the present invention may further include other additional additives in addition to the compound represented by Formula 1, if necessary, in order to prevent the collapse of the negative electrode from occurring due to the decomposition of the non-aqueous electrolyte solution in a high power environment or to further improve low-temperature high rate discharge characteristics, high-temperature stability, overcharge prevention, and an effect of suppressing battery swelling at high temperatures.

Examples of the other additive may be at least one selected from the group consisting of a cyclic carbonate-based compound, a halogen-substituted carbonate-based compound, a sultone-based compound, a sulfate-based compound, a phosphate-based or phosphite-based compound, a borate-based compound, a nitrile-based compound, a benzene-based compound, an amine-based compound, a silane-based compound, and a lithium salt-based compound.

The cyclic carbonate-based compound may include vinylene carbonate (VC) or vinyl ethylene carbonate (VEC).

The halogen-substituted carbonate-based compound, for example, may be fluoroethylene carbonate (FEC).

The sultone-based compound, for example, may be at least one compound selected from the group consisting of 1,3-propane sultone (PS),1,4-butane sultone, ethane sultone, 1,3-propene sultone (PRS), 1,4-butene sultone, and 1-methyl-1,3-propenesultone.

The sulfate-based compound, for example, may be ethylene sulfate (ESa), trimethylene sulfate (TMS), or methyl trimethylene sulfate (MTMS).

The phosphate-based or phosphite-based compound, for example, may be at least one compound selected from the group consisting of lithium difluoro(bisoxalato)phosphate, lithium difluorophosphate,tris(trimethylsilyl)phosphate,tris(trimethylsi lyl)phosphite, tris(2,2,2-trifluoroethyl)phosphate, and tris(trifluoroethyl)phosphite.

The borate-based compound may include tetraphenylborate,and lithium oxalyldifluoroborate(LiODFB) or lithium bis (oxalato) borate ($LiB(C_2O_4)_2$,LiBOB).

The nitrile-based compound may, for example, be at least one compound selected from the group consisting of succinonitrile(SN), adiponitrile, acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may be fluorobenzene, the amine-based compound may be triethanolamine or ethylenediamine, and the silane-based compound may be tetravinylsilane.

The lithium salt-based compound is a compound different from the lithium salt included in the non-aqueous electrolyte solution, wherein the lithium salt-based compound may include lithium difluorophosphate ($LiPO_2F_2$)or $LiBF_4$.

Among these other additives, when vinylene carbonate, vinylethylene carbonate, or succinonitrile is included, a more robust SEI film may be formed on the surface of the negative electrode during the initial activation process of the secondary battery. Also, when the LiBF4 is included, the high-temperature stability of the secondary battery may be improved by suppressing gas generation caused by the decomposition of the electrolyte solution during high-temperature storage.

Two or more compounds may be mixed and used as the other additives, and the total content of the compound represented by Formula 1 and other additives may be included in an amount of 50 wt% or less, specifically 0.05 to 20 wt%, specifically 0.05 to 10 wt%, based on the total weight of the non-aqueous electrolyte solution. When the amount of the other additives satisfies the above range, the low-temperature output characteristics of the battery may be improved and high-temperature storage characteristics and high-temperature lifespan characteristics may be more effectively improved. The occurrence of battery side reactions caused by the remaining additives after the reaction may be also prevented.

## Lithium Secondary Battery

Also, in another embodiment of the present invention, there is provided a lithium secondary battery including the non-aqueous electrolyte solution for a lithium secondary battery of the present invention.

Specifically, the lithium secondary battery may include a positive electrode including a positive electrode active material, a negative electrode including a negative electrode active material, a separator disposed between the positive electrode and the negative electrode, and the above-described non-aqueous electrolyte solution for a lithium secondary battery.

Meanwhile, after an electrode assembly, in which the positive electrode, the separator, and the negative electrode are sequentially stacked, is formed and accommodated in a battery case, the lithium secondary battery of the present invention may be prepared by injecting the non-aqueous electrolyte solution of the present invention.

The lithium secondary battery of the present invention may be prepared according to a conventional method known in the art and used, and a method of preparing the lithium secondary battery of the present invention is specifically the same as that described later.

### (1) Positive Electrode

The positive electrode according to the present invention may include a positive electrode active material layer including a positive electrode active material, and, if necessary, the positive electrode active material layer may further include a conductive agent and/or a binder.

The positive electrode active material is a compound capable of reversibly intercalating and deintercalating lithium, wherein the positive electrode active material may include a lithium transition metal oxide including lithium and at least one metal selected from cobalt, manganese, nickel, or aluminum, and may specifically include at least one of a lithium-manganese-based oxide, a lithium iron phosphate and a lithium-nickel-manganese-cobalt-based oxide (e.g., $Li(Ni_pCo_qMn_{r1})O_2$, where, $0<p<1$, $0<q<1$, $0<r1<1$, $p+q+r1=1$), which have high battery capacity characteristics and safety.

Specifically, the lithium-manganese-based oxide may be $LiMnO_2$ or $LiMn_2O_4$, and the lithium iron phosphate may be $LiFePO_4$.

Also, the lithium-nickel-manganese-cobalt-based oxide may include at least one selected from the group

consisting of $Li(Ni_{1/3}Mn_{1/3}CO_{1/3})O_2$, $Li(Ni_{0.6}Mn_{0.2}CO_{0.2})O_2$, $Li(Ni_{0.5}Mn_{0.3}Co_{0.2})O_2$, $Li(Ni_{0.7}Mn_{0.15}Co_{0.15})O_2$ and $Li(Ni_{0.8}Mn_{0.1}Co_{0.1})O_2$, and it is desirable to include a transition metal oxide in which a nickel content is 60 atm% or more. That is, higher capacity may be achieved as an amount of the nickel among the transition metals is increased. Thus, it is more advantageous for achieving high capacity when a nickel content is 60 atm% or more. Such lithium complex oxide may be at least one selected from the group consisting of $Li(Ni_{0.6}Mn_{0.2}Co_{0.2})O_2$,$Li(Ni_{0.7}Mn_{0.15}Co_{0.15})O_2$ and $Li(Ni_{0.8}Mn_{0.1}Co_{0.1})O_2$.

Meanwhile, in addition to the lithium transition metal oxide, the positive electrode active material may include lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where 0<Y<1), $LiMn_{2-Z}Ni_ZO_4$ (where 0<Z<2)), lithium-nickel-cobalt-based oxide (e.g., $LiNi_{1-Y1}Co_{Y1}O_2$ (where 0<Y1<1)), lithium-manganese-cobalt-based oxide (e.g., $LiCo_{1-Y2}Mn_{Y2}O_2$ (where 0<Y2<1), $LiMn_{2-Z1}Co_{Z1}O_4$ (where 0<Z1<2)), lithium-nickel-manganese-cobalt-based oxide (e.g., $Li(Ni_{p1}Co_{q1}Mn_{r2})O_4$ where 0<p1<2, 0<q1<2, 0<r2<2, p1+q1+r2=2), or lithium-nickel-cobalt-transition metal (M) oxide (e.g., $Li(Ni_{p2}Co_{q2}Mn_{r3}M_{S2})O_2$ where M is selected from the group consisting of Al, Fe, V, Cr, Ti, Ta, Mg and Mo, and p2, q2, r3, and s2 are atomic fractions of each independent elements, wherein 0<p2<1, 0<q2<1, 0<r3<1, 0<s2<1, p2+q2+r3+s2=1), and any one thereof or a compound of two or more thereof may be included.

The positive electrode active material may be present in an amount of 90 wt% to 99 wt%, specifically, 93 wt% to 98 wt% based on a total weight of solid content in the positive electrode active material layer.

The conductive agent is not particularly limited as long as it has conductivity without causing chemical changes in the battery, and for example, a conductive material such as carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide and potassium titanate; conductive metal oxide such as titanium oxide; or polyphenylene derivatives, may be used.

The conductive agent is generally included in an amount of 1 to 30wt% based on the total weight of the solid content in the positive electrode active material layer.

The binder is a component that assists in the binding between positive electrode active material particles and in the binding between the positive electrode active material and the current collector, wherein the binder is commonly added in an amount of 1 wt% to 30 wt% based on the total weight of the solid content in the positive electrode active material layer. Examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The positive electrode of the present invention as described above may be prepared by a method of preparing a positive electrode which is known in the art. For example, the positive electrode may be prepared by a method in which a positive electrode collector is coated with a positive electrode slurry, which is prepared by dissolving or dispersing the positive electrode active material, the binder, and/or the conductive agent in a solvent and then dried and rolled to form a positive electrode active material layer, or may be prepared by casting the positive electrode active material layer on a separate support, and then laminating a film separated from the support on the positive electrode collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The solvent may include organic solvents such as NMP(N-methyl-2-pyrrolidone), etc., and may be used in an amount such that desirable viscosity is obtained when the positive electrode active material as well as optionally the binder and the conductive agent are included. For example, it may be included so that the solid content concentration in the active material slurry including the positive electrode active material and optionally the binder and the conductive material is in the range of 10 wt% to 70 wt%, preferably 20 wt% to 60 wt%.

### (2) Negative Electrode

Next, a negative electrode will be described.

The negative electrode according to the present invention includes a negative electrode active material layer including a negative electrode active material, and the negative electrode active material layer may further include a conductive agent and/or a binder, if necessary. The negative electrode active material may include at least one selected from the group consisting of a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating the lithium ions, a carbon-based

negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of Cu, Ni, Na, K, Rb, Cs, Fr, Be, Mg, Ca, Sr, Si, Sb, Pb, In, Zn, Ba, Ra, Ge, Al and Sn or an alloy of lithium and the metal may be used.

One selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$($0 \leq x \leq 1$), $Li_xWO_2$($0 \leq x \leq 1$) and $Sn_xMe_{1-x}Me'_yO_z$ (Me: Mn, Fe, Pb, Ge; Me': Al, B, P, Si, Groups I, II and III elements of the periodic table, or halogen; $0<x\leq 1$; $1\leq y\leq 3$; $1\leq z\leq 8$) may be used as the metal composite oxide.

The material, which may be doped and undoped with the lithium, may include Si, $SiO_x$($0<x<2$), a Si-Y alloy (where the Y is an element selected from the group consisting of alkali metal, alkaline earth metal, a Group 13 element, a Group 14 element, transition metal, a rare earth element, and a combination thereof, and is not Si), Sn, $SnO_2$, and Sn-Y (where the Y is an element selected from the group consisting of alkali metal, alkaline earth metal, a Group 13 element, a Group 14 element, transition metal, a rare earth element, and a combination thereof, and is not Sn), and a mixture of $SiO_2$ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithium-containing titanium composite oxide (LTO), vanadium oxide, and lithium vanadium oxide.

The negative electrode active material may be present in an amount of 80 wt% to 99 wt% based on a total weight of the solid content in the negative electrode active material layer.

The conductive agent is a component for further improving the conductivity of the negative electrode active material, wherein the conductive agent may be added in an amount of 1 wt% to 20 wt% based on the total weight of the solid content in the negative electrode active material layer. Any conductive agent may be used without particular limitation so long as it has conductivity without causing adverse chemical changes in the battery, and, for example, a conductive material such as: graphite powder such as natural graphite and artificial graphite; carbon black such as acetylene black, Ketjen black, channel black, furnace black, lamp black, and thermal black; conductive fibers such as carbon fibers and metal fibers; conductive powder such as fluorocarbon powder, aluminum powder, or nickel powder; conductive whiskers such as zinc oxide and potassium titanate; conductive metal oxide such as titanium oxide; or polyphenylene derivatives, may be used.

The binder is a component that assists in the binding between the conductive agent, the active material, and the current collector, wherein the binder is commonly added in an amount of 1wt% to 30wt% based on the total weight of the solid content in the negative electrode active material layer. Examples of the binder may be a fluorine resin-based binder including polyvinylidene fluoride (PVDF) or polytetrafluoroethylene (PTFE); a rubber-based binder including a styrene-butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder such as polyvinyl alcohol; a polyolefin-based binder including polyethylene or polypropylene; a polyimide-based binder; a polyester-based binder; and a silane-based binder.

The negative electrode may be prepared by a method of preparing a negative electrode which is known in the art. For example, the negative electrode may be prepared by a method in which a negative electrode collector is coated with a negative electrode slurry, which is prepared by dissolving or dispersing the negative electrode active material as well as selectively the binder and the conductive agent in a solvent, rolled and dried to form a negative electrode active material layer, or may be prepared by casting the negative electrode active material layer on a separate support and then laminating a film separated from the support on the negative electrode collector.

The negative electrode collector may typically have a thickness of 3 $\mu$m to 500 $\mu$m. The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Similar to the positive electrode collector, microscopic irregularities may be formed on the surface of the collector to improve the adhesion of the negative electrode active material. The negative electrode collector, for example, may be used in various shapes such as that of a film, a sheet, a foil, a net, a porous body, a foam body, a non-woven fabric body, and the like.

The solvent may include water or an organic solvent such as NMP and alcohol, and may be used in an amount such that desirable viscosity is obtained when the negative electrode active material as well as optionally the binder and the conductive agent are included. For example, the solvent may be included in an amount such that a concentration of the solid content in the negative electrode slurry including the negative electrode active material as well as optionally the binder and the conductive agent is in a range of 50 wt% to 75 wt%, preferably 50 wt% to 65wt%.

### (3) Separator

The lithium secondary battery according to the present invention includes a separator between the positive electrode and the negative electrode.

As the separator separates the negative electrode and the positive electrode and provides a movement path of lithium ions, wherein any separator may be used without particular limitation as long as it is typically used as the separator in a lithium secondary battery, and particularly, a separator having high moisture-retention ability for an electrolyte due to low resistance to the transfer of electrolyte ions may be desirable.

Specifically, as the separator, a porous polymer film generally used, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure of two layers or more of these may be used.

The lithium secondary battery according to the present invention as described above may be suitably used in portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system. A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail according to examples. However, the invention may be embodied in many different forms and should not be construed as being limited to the embodiments set forth herein. Rather, these example embodiments are provided so that this description will be thorough and complete, and will fully convey the scope of the present invention to those skilled in the art.

Hereinafter, the present invention will be described in detail according to detailed examples.

## Examples

### Example 1.

(Non-aqueous Electrolyte Solution Preparation)

After $LiPF_6$ was dissolved in a non-aqueous organic solvent, in which ethylene carbonate (EC), propylene carbonate (PC), ethyl propionate (EP) and propyl propionate (PP) were mixed in a volume ratio of 20:10:20:50, such that a concentration of the $LiPF_6$ was 1.0 M, a non-aqueous electrolyte solution was prepared by adding 0.1 wt% of a compound represented by Formula 1a, and 0.5 wt% of vinylene carbonate (hereinafter "VC"), 1.0 wt% of 1,3-propanesultone (hereinafter "PS"), 5.0 wt% of fluoroethylene carbonate (hereinafter "FEC"), 1.0 wt% of succinonitrile (hereinafter "SN") and 0.5 wt% of lithium oxalyldifluoroborate (hereinafter "LiODFB") as other additives (see Table 1 below).

(Secondary Battery Preparation)

A positive electrode active material particle ($LiCoO_2$), a conductive agent (carbon black), and a binder (polyvinylidene fluoride) were added to N-methyl-2-pyrrolidone (NMP), which is a solvent, in a weight ratio of 97.5:1:1.5 to prepare a positive electrode slurry (solid content: 50.0 wt%).A positive electrode collector (Al thin film) with a thickness of 15 $\mu$m was coated with the positive electrode slurry, dried, and then roll-pressed to prepare a positive electrode.

A negative electrode active material (graphite), a binder (SBR-CMC), and a conductive agent (carbon black) were added to water in a weight ratio of 95:3.5:1.5 to prepare a negative electrode slurry (solid content: 60 wt%). A negative electrode collector (Cu thin film) with a thickness of 6um, was coated with the negative electrode slurry, dried, and then roll-pressed to prepare a negative electrode.

An electrode assembly was prepared by sequentially stacking the positive electrode, a polyolefin-based porous separator coated with inorganic particles ($Al_2O_3$), and the negative electrode.

After putting the above assembled electrode assembly in a battery case, 6 mL of the above-prepared non-aqueous electrolyte solution was injected to prepare a lithium secondary battery.

**Example 2.**

After $LiPF_6$ was dissolved in a non-aqueous organic solvent such that a concentration of the $LiPF_6$ was 1.0 M, a lithium secondary battery was prepared in the same manner as in Example 1 except that a non-aqueous electrolyte solution was prepared by adding 1.0 wt% of a compound represented by Formula 1a, and 0.5 wt% of VEC, 1.0 wt% of PS, 5.0 wt% of FEC, 1.0 wt% of SN and 0.5 wt% of LiODFB as other additives (see Table 1 below).

**Example 3.**

After $LiPF_6$ was dissolved in a non-aqueous organic solvent such that a concentration of the $LiPF_6$ was 1.0 M, a lithium secondary battery was prepared in the same manner as in Example 1 except that a non-aqueous electrolyte solution was prepared by adding 5.0 wt% of a compound represented by Formula 1a, and 0.5 wt% of VEC, 1.0 wt% of PS, 5.0 wt% of FEC, 1.0 wt% of SN and 0.5 wt% of LiODFB as other additives (see Table 1 below).

**Example 4.**

After $LiPF_6$ was dissolved in a non-aqueous organic solvent such that a concentration of the $LiPF_6$ was 1.0 M, a lithium secondary battery was prepared in the same manner as in Example 1 except that a non-aqueous electrolyte solution was prepared by adding 11.0 wt% of a compound represented by Formula 1a, and 0.5 wt% of VEC, 1.0 wt% of PS, 5.0 wt% of FEC, 1.0 wt% of SN and 0.5 wt% of LiODFB as other additives (see Table 1 below).

**Example 5.**

After $LiPF_6$ was dissolved in a non-aqueous organic solvent such that a concentration of the $LiPF_6$ was 1.0 M, a lithium secondary battery was prepared in the same manner as in Example 1 except that a non-aqueous electrolyte solution was prepared by adding 1.0 wt% of a compound represented by Formula 1b, and 0.5 wt% of VEC, 1.0 wt% of PS, 5.0 wt% of FEC, 1.0 wt% of SN and 0.5 wt% of LiODFB as other additives (see Table 1 below).

**Example 6.**

After $LiPF_6$ was dissolved in a non-aqueous organic solvent such that a concentration of the $LiPF_6$ was 1.0 M, a lithium secondary battery was prepared in the same manner as in Example 1 except that a non-aqueous electrolyte solution was prepared by adding 1.0 wt% of a compound represented by Formula 1c, and 0.5 wt% of VEC, 1.0 wt% of PS, 5.0 wt% of FEC, 1.0 wt% of SN and 0.5 wt% of LiODFB as other additives (see Table 1 below).

**Comparative Example 1.**

After $LiPF_6$ was dissolved in a non-aqueous organic solvent such that a concentration of the $LiPF_6$ was 1.0 M, a lithium secondary battery was prepared in the same manner as in Example 1 except that a non-aqueous electrolyte solution was prepared by adding 0.5 wt% of VEC, 1.0 wt% of PS, 5.0 wt% of FEC, 1.0 wt% of SN and 0.5 wt% of LiODFB as other additives (see Table 1 below).

**Comparative Example 2.**

A lithium secondary battery was prepared in the same manner as in Example 1 except that a non-aqueous electrolyte solution was prepared by adding a compound represented by the following Formula 2 instead of a compound represented by Formula 1a (see Table 1 below).

[00144] [Formula 2]

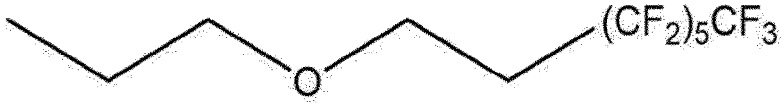

**Comparative** Example 3.

A lithium secondary battery was prepared in the same manner as in Example 2 except that a non-aqueous electrolyte solution was prepared by adding a compound represented by the following Formula 2 instead of a compound represented by Formula 1a (see Table 1 below).

[Table 1]

| | Lithium salt | Non-aqueous organic solvent | Additives | | Other additives Amount (wt%) |
|---|---|---|---|---|---|
| | | | Formula | Amount (wt%) | |
| Example 1 | 1. OM $LiPF_6$ | EC:PC:EP:P P = 20:10:20:5 0 volume ratio | 1a | 0.1 | 8.0 |
| Example 2 | | | 1a | 1.0 | |
| Example 3 | | | 1a | 5.0 | |
| Example 4 | | | 1a | 11.0 | |
| Example 5 | | | 1b | 1.0 | |
| Example 6 | | | 1c | 1.0 | |
| Comparative Example 1 | | | - | - | |
| Comparative Example 2 | | | 2 | 0.1 | |
| Comparative Example 3 | | | 2 | 1.0 | |

Meanwhile, In Table 1, the abbreviation of each compound has the following meaning.

EC: Ethylene Carbonate

PC: Propylene carbonate

EP: Ethyl Propionate

PP: Propyl Propionate

**Experimental Examples**

**Experimental Example 1: Interfacial resistance Evaluation**

After the lithium secondary batteries prepared in Examples 1 to 6 and the lithium secondary batteries prepared in Comparative Examples 1 to 3 were respectively were discharged for 10 seconds at 5C rate at room temperature (25°C) to adjust a SOC to be 50%, the initial interface resistance was calculated from the amount of voltage drop measured using VMP3 (manufactured by Biologics), and the results are presented in Table 2 below by expressing the same as a contrast ratio (%) with respect to the secondary battery of Comparative Example 1.

**Experimental Example 2: Room-temperature Discharge Capacity**

After a constant current was applied to the lithium secondary batteries prepared in Examples 1 to 3, 5 and 6 and the lithium secondary batteries prepared in Comparative Examples 1 to 3 at 0.2 C rate in a CC-CV (constant current-constant voltage) manner at room temperature (25°C) to 4.45 V, the current was controlled at 4.45V in a constant voltage manner. Capacities, which measured using PNE-0506 charge/discharge equipment (manufacturer: PNE Solution, 5V, 6A), obtained by a cut-off voltage of 3.0 V, in a CC (constant current) manner at 0.2C rate during discharge are presented in Table 2 below.

**Experimental Example 3:Room-temperature capacity retention rate**

Charging the lithium secondary batteries prepared in Examples 1 to 6 and the lithium secondary batteries prepared in Comparative Examples 1 to 3 at 2C rate to 4.45 V under a constant current/constant voltage condition at 25°C

and discharging them at 1C rate to 3.0 V under a constant current condition were performed as one cycle, and the discharge capacity and resistance after the 1 cycle were measured by using PNE-0506 charge/discharge equipment (manufacturer: PNE solution, 5V, 6A).

Subsequently, after 200 cycles of a charge and discharge process under the same cycle conditions as above, a capacity retention (%) was calculated by using the following Equation 1, and the results thereof are presented in Table 2 below.

$$\text{Capacity retention (\%)} = (\text{discharge capacity after 200 cycles / discharge capacity after 1 cycle}) \times 100 \qquad \text{[Equation 1]}$$

[Table 2]

| | Room temperature (25°C) | | |
|---|---|---|---|
| | Interfacial resistance (%) | Discharge Capacity (mAh) | Capacity retention rate (%) |
| Example 1 | - 11.2 | 4975 | 96.2 |
| Example 2 | - 13.5 | 4982 | 96.8 |
| Example 3 | -4.8 | 4943 | 95.3 |
| Example 4 | 1.1 | - | 91.8 |
| Example 5 | -13.9 | 4984 | 96.8 |
| Example 6 | -9.7 | 4971 | 96.6 |
| Comparative Example 1 | Standard | 4765 | 92.0 |
| Comparative Example 2 | 1.4 | 4710 | 90.8 |
| Comparative Example 3 | 3.8 | 4683 | 88.2 |

Referring to Table 2 above, it may be understood that the secondary batteries of Examples 1 to 3, 5 and 6 of the present invention improved all the interfacial resistance (%) at room temperature (25°C), discharge capacity (mAh), and capacity retention rate (%) after the 200 cycles compared to the secondary batteries of Comparative Examples 1 to 3.

Meanwhile, it seems that in the case of the secondary battery of Example 4, which includes a rather large amount of additives, the interfacial resistance (%) was increased and the capacity retention rate (%) was relatively decreased due to the increase in the resistance and side reactions caused by the additives inside the battery compared to the secondary batteries of Examples 1 to 3, 5 and 6.

**Experimental Example 4: Low-temperature discharge capacity**

After a constant current was applied to the lithium secondary batteries prepared in Examples 1 to 6 and the lithium secondary batteries prepared in Comparative Examples 1 to 3 at 0.2 C rate in a CC-CV (constant current-constant voltage) manner at low temperature (10°C) to 4.45 V, the current was controlled at 4.45V in a constant voltage manner. Then, the lithium secondary batteries were discharged at 3.0 V cut-off in a CC (constant current) manner at 0.2C rate, and the discharge capacity was measured by using PNE-0506 charge/discharge equipment (manufacturer: PNE Solution, 5V, 6A). The results thereof are presented in Table 3 below.

[Table 3]

| | Discharge capacity (mAh)at low temperature (10°C) |
|---|---|
| Example 1 | 4689 |
| Example 2 | 4701 |
| Example 3 | 4667 |
| Example 4 | 4235 |
| Example 5 | 4721 |
| Example 6 | 4691 |
| Comparative Example 1 | 4214 |

(continued)

| | Discharge capacity (mAh)at low temperature (10°C) |
|---|---|
| Comparative Example 2 | 4146 |
| Comparative Example 3 | 4068 |

Referring to Table 3 above, it may be understood that discharge capacity of the secondary batteries of Examples 1 to 6 were 4235 mAh or more at a low-temperature, and was improved compared to the secondary batteries of Comparative Examples 1 to 3.

**Experimental Example 5: 2C Charging potential**

While the secondary batteries prepared in Examples 1 to 3, 5 and 6 of the present invention and the secondary batteries prepared in Comparative Examples 1 to 3 were charged at 2C rate in a CC-CV manner at low temperature (10°C), the capacity at an initial stage of the charging (~ SOC 20%) was measured by using PNE-0506 charge/discharge equipment (manufacturer: PNE Solution, 5V, 6A), the 2C charging potential (average voltage) at an initial stage of the charging was calculated by using Equation 2 below, and the results thereof are presented in Table 4 below.

2C charging potential (average voltage) (V) = Charging energy up to SOC 20% (mWh) / (capacity at SOC 20% (mAh)) [Equation 2]

[Table 4]

| | 2C charging potential (V) at low temperature (10°C) |
|---|---|
| Example 1 | 4.08 |
| Example 2 | 4.02 |
| Example 3 | 4.10 |
| Example 5 | 4.02 |
| Example 6 | 4.08 |
| Comparative Example 1 | 4.23 |
| Comparative Example 2 | 4.25 |
| Comparative Example 3 | 4.29 |

Referring to Table 4 above, it may be understood that the 2C charging potential of the secondary batteries of Examples 1 to 3, 5, and 6 at a low temperature is 4.10 V or less, and may be charged at a lower potential compared with the secondary batteries of Comparative Examples 1 to 3.

It may be understood that in the case of the secondary battery of Example 2, the 2C charging potential was lower compared with the secondary battery of Example 1, which means that the overpotential has decreased. As a result, it may be understood that the effect of reducing resistance was more improved when the additive content was 1.0 wt% compared to when the additive content is 0.1 wt%.

On the other hand, in the case of the secondary battery of Example 3 where the additive content was 5.0 wt%, the film thickness was increased in comparison to the secondary batteries of Examples 1 and 2, which led to a relatively higher resistance so that the potential rather increased.

Referring to Table 4 above, it may be understood that in the case of the secondary battery of Example 1 in which the additive content was 0.1 wt%, the fluorocarbon component among the SEI components was relatively low, and thus the effect of reducing the resistance was relatively decreased in comparison to the secondary battery of Example 2 in which the additive content was 1.0 wt%. That is, it can be confirmed that as the content of the fluorocarbon component which is advantageous for Li diffusion increases due to the low surface energy during the formation of the SEI film, the resistance of the SEI film is decreased.

## Claims

1. A non-aqueous electrolyte solution for a lithium secondary battery, the non-aqueous electrolyte solution comprising:

a lithium salt,
a non-aqueous organic solvent, and
a compound represented by Formula 1

[Formula 1]

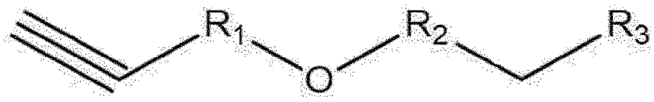

wherein in Formula 1,
$R_1$ and $R_2$are each independently an alkylene group having 1 to 10 carbon atoms, and
$R_3$ is an alkyl group having 1 to 20 carbon atoms which are substituted with one or more fluorines.

2. The non-aqueous electrolyte solution for a lithium secondary battery as claimed in claim 1, wherein in Formula 1, $R_1$ and $R_2$are each independently an alkylene group having 1 to 5 carbon atoms, and $R_3$ is an alkyl group having 3 to 20 carbon atoms which are substituted with one or more fluorines.

3. The non-aqueous electrolyte solution for a lithium secondary battery as claimed in claim 1, wherein in Formula 1, $R_1$ and $R_2$are each independently an alkylene group having 1 to 3 carbon atoms, and $R_3$ is an alkyl group having 3 to 15 carbon atoms which are substituted with one or more fluorines.

4. The non-aqueous electrolyte solution for a lithium secondary battery as claimed in claim 1, wherein in the compound represented by Formula 1, $R_3$ is an alkyl group having 3 to 10 carbon atoms which are substituted with one or more fluorines.

5. The non-aqueous electrolyte solution for a lithium secondary battery as claimed in claim 1, wherein the compound represented by Formula 1 is at least one of compounds represented by Formula 1a to Formula 1c below.

[Formula 1a]

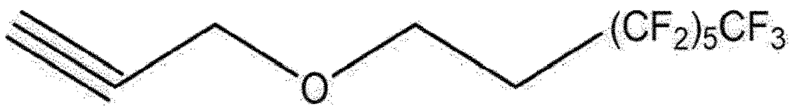

[Formula 1b]

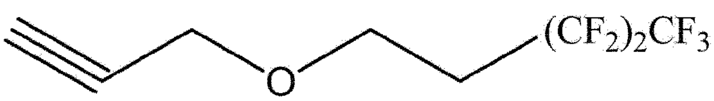

[Formula 1c]

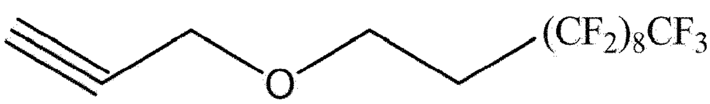

.

6. The non-aqueous electrolyte solution for a lithium secondary battery as claimed in claim 1, wherein the compound

represented by Formula 1 is present in an amount of 0.01 wt% to 10.0 wt% based on a total weight of the non-aqueous electrolyte solution for a lithium secondary battery.

7. The non-aqueous electrolyte solution for a lithium secondary battery as claimed in claim 1, wherein the compound represented by Formula 1 is present in an amount of 0.1 wt% to 6.0 wt% based on a total weight of the non-aqueous electrolyte solution for a lithium secondary battery.

8. The non-aqueous electrolyte solution for a lithium secondary battery as claimed in claim 1, wherein the non-aqueous electrolyte solution for a lithium secondary battery further includes at least one selected from a halogen-substituted or unsubstituted carbonate-based compound, a sultone-based compound, a sulfate-based compound, a phosphate or phosphite-based compound, a borate-based compound, a nitrile-based compound, an amine-based compound, a silane-based compound, and a lithium salt-based compound.

9. A lithium secondary battery comprising:

a positive electrode including a positive electrode active material;
a negative electrode including a negative electrode active material;
a separator disposed between the negative electrode and the positive electrode; and the non-aqueous electrolyte solution for a lithium secondary battery as claimed in claim 1.

**Patentansprüche**

1. Wasserfreie Elektrolytlösung für eine Lithiumsekundärbatterie, die wasserfreie Elektrolytlösung umfassend:

ein Lithiumsalz,
ein wasserfreies organisches Lösungsmittel, und
eine durch Formel 1 dargestellte Verbindung

[Formel 1]

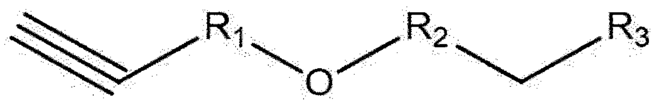

worin, in Formel 1,
$R_1$ und $R_2$ jeweils unabhängig eine Alkylengruppe mit 1 bis 10 Kohlenstoffen sind, und
$R_3$ eine Alkylgruppe mit 1 bis 20 Kohlenstoffatomen ist, die mit ein oder mehreren Fluor substituiert sind.

2. Wasserfreie Elektrolytlösung für eine Lithiumsekundärbatterie wie in Anspruch 1 beansprucht, worin, in Formel 1, $R_1$ und $R_2$ jeweils unabhängig eine Alkylengruppe mit 1 bis 5 Kohlenstoffatomen sind, und $R_3$ eine Alkylgruppe mit 3 bis 20 Kohlenstoffatomen ist, die mit ein oder mehreren Fluor substituiert sind.

3. Wasserfreie Elektrolytlösung für eine Lithiumsekundärbatterie wie in Anspruch 1 beansprucht, worin, in Formel 1, $R_1$ und $R_2$ jeweils unabhängig eine Alkylengruppe mit 1 bis 3 Kohlenstoffatomen sind, und $R_3$ eine Alkylgruppe mit 3 bis 15 Kohlenstoffatomen ist, die mit ein oder mehreren Fluor substituiert sind.

4. Wasserfreie Elektrolytlösung für eine Lithiumsekundärbatterie wie in Anspruch 1 beansprucht, worin, in der durch Formel 1 dargestellten Verbindung, $R_3$ eine Alkylgruppe mit 3 bis 10 Kohlenstoffatomen ist, die mit ein oder mehreren Fluor substituiert sind.

5. Wasserfreie Elektrolytlösung für eine Lithiumsekundärbatterie wie in Anspruch 1 beansprucht, worin die durch Formel 1 dargestellte Verbindung mindestens eine Verbindung ist, die durch nachstehende Formel 1a bis Formel 1c dargestellt ist.

[Formel 1a]

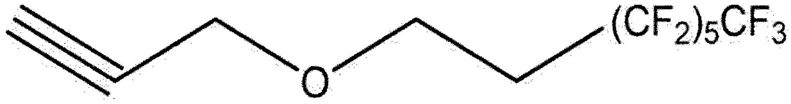

[Formel 1b]

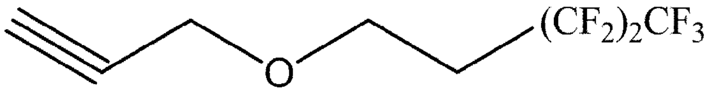

[Formel 1c]

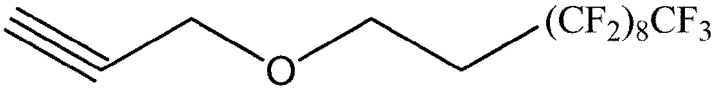

.

6. Wasserfreie Elektrolytlösung für eine Lithiumsekundärbatterie wie in Anspruch 1 beansprucht, worin die durch Formel 1 dargestellte Verbindung in einer Menge von 0,01 Gew.-% bis 10,0 Gew.-%, basierend auf dem Gesamtgewicht der wasserfreien Elektrolytlösung für eine Lithiumsekundärbatterie, vorhanden ist.

7. Wasserfreie Elektrolytlösung für eine Lithiumsekundärbatterie wie in Anspruch 1 beansprucht, worin die durch Formel 1 dargestellte Verbindung in einer Menge von 0,1 Gew.-% bis 6,0 Gew.-%, basierend auf dem Gesamtgewicht der wasserfreien Elektrolytlösung für eine Lithiumsekundärbatterie, vorhanden ist.

8. Wasserfreie Elektrolytlösung für eine Lithiumsekundärbatterie wie in Anspruch 1 beansprucht, worin die wasserfreie Elektrolytlösung für eine Lithiumsekundärbatterie ferner mindestens eines enthält, ausgewählt aus einer Halogen-substituierten oder unsubstituierten kohlenstoffbasierten Verbindung, einer Sulton-basierten Verbindung, einer Sulfat-basierten Verbindung, einer Phosphat- oder Phosphit-basierten Verbindung, einer Borat-basierten Verbindung, einer Nitrilbasierten Verbindung, einer Amin-basierten Verbindung, einer Silan-basierten Verbindung, und einer Lithiumsalz-basierten Verbindung.

9. Lithiumsekundärbatterie, umfassend:

eine positive Elektrode, die ein Aktivmaterial für eine positive Elektrode beinhaltet;
eine negative Elektrode, die ein Aktivmaterial für eine negative Elektrode beinhaltet;
einen Separator, der zwischen der negativen Elektrode und der positiven Elektrode angeordnet ist; und die wasserfreie Elektrolytlösung für eine Lithiumsekundärbatterie wie in Anspruch 1 beansprucht.

## Revendications

1. Solution d'électrolyte non aqueux pour une batterie secondaire au lithium, la solution d'électrolyte non aqueux comprenant :

un sel de lithium,
un solvant organique non aqueux, et
un composé représenté par la Formule 1

[Formule 1]

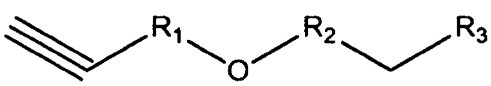

dans laquelle dans la Formule 1,
$R_1$ et $R_2$ sont chacun indépendamment un groupe alkylène ayant de 1 à 10 atomes de carbone, et
$R_3$ est un groupe alkyle ayant de 1 à 20 atomes de carbone qui sont substitués par un ou plusieurs atomes de fluor.

**2.** Solution d'électrolyte non aqueux pour une batterie secondaire au lithium selon la revendication 1, dans laquelle, dans la Formule 1, $R_1$ et $R_2$ sont chacun indépendamment un groupe alkylène ayant de 1 à 5 atomes de carbone, et $R_3$ est un groupe alkyle ayant de 3 à 20 atomes de carbone qui sont substitués par un ou plusieurs atomes de fluor.

**3.** Solution d'électrolyte non aqueux pour une batterie secondaire au lithium selon la revendication 1, dans laquelle, dans la Formule 1, $R_1$ et $R_2$ sont chacun indépendamment un groupe alkylène ayant de 1 à 3 atomes de carbone, et $R_3$ est un groupe alkyle ayant de 3 à 15 atomes de carbone qui sont substitués par un ou plusieurs atomes de fluor.

**4.** Solution d'électrolyte non aqueux pour une batterie secondaire au lithium selon la revendication 1, dans laquelle, dans le composé représenté par la Formule 1, $R_3$ est un groupe alkyle ayant de 3 à 10 atomes de carbone qui sont substitués par un ou plusieurs atomes de fluor.

**5.** Solution d'électrolyte non aqueux pour une batterie secondaire au lithium selon la revendication 1, dans laquelle le composé représenté par la Formule 1 est au moins un des composés représentés par les Formules 1a à 1c ci-dessous.

[Formule 1a]

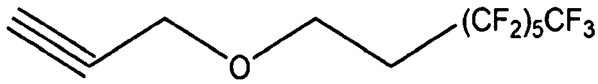

[Formule 1b]

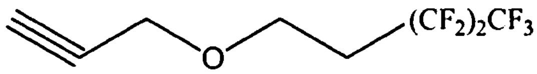

[Formule 1c]

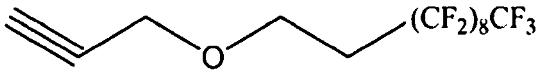

**6.** Solution d'électrolyte non aqueux pour une batterie secondaire au lithium selon la revendication 1, dans laquelle le composé représenté par la Formule 1 est présent dans une quantité de 0,01 % en poids à 10,0 % en poids sur la base d'un poids total de la solution d'électrolyte non aqueux pour une batterie secondaire au lithium.

**7.** Solution d'électrolyte non aqueux pour une batterie secondaire au lithium selon la revendication 1, dans laquelle le composé représenté par la Formule 1 est présent dans une quantité de 0,1 % en poids à 6,0 % en poids sur la base d'un poids total de la solution d'électrolyte non aqueux pour une batterie secondaire au lithium.

**8.** Solution d'électrolyte non aqueux pour une batterie secondaire au lithium selon la revendication 1, dans laquelle la solution d'électrolyte non aqueux pour une batterie secondaire au lithium inclut en outre au moins un composé sélectionné parmi un composé à base de carbonate substitué par un halogène ou non substitué,
un composé à base de sultone, un composé à base de sulfate, un composé à base de phosphate ou de phosphite, un composé à base de borate, un composé à base de nitrile, un composé à base d'amine, un composé à base de silane et un composé à base de sel de lithium.

**9.** Batterie secondaire au lithium comprenant :

une électrode positive incluant un matériau actif d'électrode positive ;
une électrode négative incluant un matériau actif d'électrode négative ;
un séparateur disposé entre l'électrode négative et l'électrode positive ; et la solution d'électrolyte non aqueux pour une batterie secondaire au lithium selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210135188
- KR 1020220127418
- US 10923768 B2